# FASCICULE DE BREVET EUROPEEN

(11) **EP 1 695 576 B1**
(45) Date de publication et mention de la délivrance du brevet: **14.05.2008**
(21) Numéro de dépôt: 04804866.4
(22) Date de dépôt: 15.12.2004
(51) Int. Cl.: H04Q 7/32, H04L 29/08

(54) **PROCEDE ET DISPOSITIF DE SAUVEGARDE AVANCE DE DONN ES PERS ONNELLES D UN ABONNE A UN RESEAU DE TELECOMMUNICATIONS**
VERFAHREN UND VORRICHTUNG ZUR VERBESSERTEN SICHERUNGSSPEICHERUNG VON PERSONENGEBUNDENEN DATEN EINES TEILNEHMERS IN EINEM TELEKOMMUNIKATIONSNETZWERK
METHOD AND DEVICE FOR PRE-SAVING PERSONAL DATA FOR A SUBSCRIBER TO A TELECOMMUNICATIONS NETWORK

(30) Priorité: 19.12.2003 FR 0351132
(43) Date de publication de la demande: 30.08.2006
(73) Titulaire: GEMPLUS, 13420 Gémenos (FR)
(72) Inventeur: MARTIN, Christophe, 13600 Ceyreste (FR); SCHIRAR, Stéphane, 13720 La Bouilladisse (FR)
(86) Numéro de dépôt international: PCT/EP2004/053518
(87) Numéro de publication internationale: WO 2005/069651

(56) Documents cités:
- WO-A-01/62029
- WO-A-03/007639
- WO-A-03/037015
- "ETSI TS 101 267 v8.2.2" 5 juillet 2000 (2000-07-05), ETSI , XP002296727 Digital cellular telecommunications (Phase 2+); Specification of the SIM Application Toolkit for the Subscriber Identity Module- Mobile Equipment (SIM-ME) interface (GSM 11.14 version 8.2.1) page 13, alinéa 4.2 - alinéa 4.3 page 14, alinéa 4.11 page 19, alinéa 6.1 - page 21, alinéa 6.2

## Description

L'invention concerne le domaine des réseaux de communications sans fil et plus particulièrement un procédé pour sauvegarder un fichier d'informations personnelles, par exemple un annuaire téléphonique mémorisé dans les appareils mobiles utilisant ces réseaux ou les cartes d'identification d'abonné associées.

Dans un tel réseau, tel que du type GSM, acronyme pour l'expression anglo-saxonne "Global System for Mobile Communication, des abonnés possèdent une carte SIM ou (U)SIM, acronyme de l'expression anglo-saxonne "(Universal) Subscriber Identity Module". Cette carte SIM est personnalisée de manière à permettre à l'abonné d'avoir accès à différentes applications et/ou services. Elle contient en outre les informations personnelles, comme des fichiers d'annuaire téléphonique, d'agendas, autres...

Actuellement les opérateurs permettent à leur abonné de sauvegarder ces informations personnelles sur un serveur à l'aide de messages courts du type SMS (acronyme de l'expression ango-saxonne «Short Message Service») .

La plupart des solutions techniques reposent sur un mécanisme de synchronisation des données mémorisées dans la carte et/ou mobile avec celles mémorisées dans une base de sauvegarde du serveur. Un tel système est connu de la demande de brevet internationale WO 03/007639, publiée le 23 Janvier 2003. Dans ce mécanisme, uniquement les données modifiées sont transférées de manière à optimiser l'utilisation du SMS en raison de son coût.

La sauvegarde peut être provoquée automatiquement ou manuellement sur l'initiative de l'utilisateur.

Lorsque le volume des données est important, la sauvegarde à distance sur un serveur représente l'inconvénient de présenter un coût relativement non négligeable et de prendre trop de temps selon un mode continu.

On estime à environ 5 minutes le temps nécessaire pour sauvegarder un répertoire de 255 numéros de téléphone avec noms associés à l'aide de message type SMS.

D'autre part, les mobiles ne présentent pas tous les mêmes fonctionnalités permettant de mettre en oeuvre une solution unique de sauvegarde facile à déployer et simple d'utilisation.

Un but de la présente invention est de trouver un mécanisme de sauvegarde des données de l'abonné sur un serveur d'un réseau de télécommunication, qui ne présente pas les inconvénients ci-dessus.

A cet effet, l'invention a pour objet un procédé de sauvegarde de données personnelles d'un abonné à un réseau de communications sans fil, les données étant mémorisées dans une station mobile de communication et sauvegardées dans un serveur du réseau, à l'aide d'un premier canal de communication et/ou selon un premier mode de sauvegarde.

Il se distingue en ce qu'il comprend au moins les étapes suivantes selon lesquelles:
- on recherche si l'appareil mobile dispose d'une fonction permettant d'établir au moins un second canal de communication et/ou un autre mode de sauvegarde, et dans le cas favorable,
- on ouvre la communication sur ce second canal et/ou selon cet autre mode, et on réalise la sauvegarde des données via ce second canal de communication et/ou cet autre mode.

Ce procédé, mis en oeuvre à l'aide notamment d'une application spécifique disposée dans la carte SIM, permet d'effectuer des sauvegarde avec le canal le plus adapté lorsque celui-ci existe. Cet automatisme est utile compte tenu de la diversité des fonctions supportées par les équipements mobiles disponibles sur le marché. Tous ne supportent pas un autre canal de communication et dans le cas où plusieurs canaux et/ou modes sont possibles, l'invention permet à l'utilisateur de ne pas se préoccuper de la configuration nécessaire pour une sauvegarde optimale ou selon ses propres critères pré-enregistrés ou présélectionnés.

Par contre, dans le cas d'un mobile peu perfectionné n'offrant pas d'autre canal ou quand une sauvegarde de données volumineuses doit se faire nécessairement par un canal donné peu intéressant à l'égard du coût et du délai engendré, un mode de sauvegarde alternatif doit pouvoir être mise en oeuvre ou proposé à l'abonné (mode différé, économique...)

Selon d'autres caractéristiques du procédé:
- La fonction du mobile permettant d'établir au moins un second canal est le BIP;
- Le procédé comprend comporte une étape préalable 11 selon laquelle on détecte que le volume des données à sauvegarder est supérieur à un volume prédéterminé, et on choisit le second canal 9 et/ou un autre mode plus adapté;

A cet égard, d'autres aménagements de sauvegarde, modes ou options peuvent être proposés à l'abonné ou mis en oeuvre automatiquement pour réduire notamment le délai d'attente et/ou le coût. Dans le cas automatique, le procédé peut mettre en oeuvre des options, critères par défaut ou sélectionnables ainsi que des tests relatifs à ses options ou critères.
- Le seuil de volume prédéterminé est égal à 200 KBytes, et le seuil de délai d'attente est égal à 2 minutes;
- Le second canal est choisi parmi CSD, GPRS;
- Le premier canal est du type à messages courts SMS;
- Le procédé comporte une étape préalable d'évaluation selon laquelle on détermine si le coût des données à sauvegarder est supérieur à un seuil prédéterminé, et on effectue la sauvegarde selon un canal et/ou un mode de sauvegarde adapté;

L'invention a également pour objet un portable comprenant une application pour la sauvegarde de données personnelles d'un abonné dans un serveur d'un réseau de communications sans fil, à l'aide d'un premier canal de communication et selon un premier mode de sauvegarde,

Il se distingue en ce que l'application est apte à mettre en oeuvre les étapes suivantes consistant:
- à rechercher si le dispositif dispose d'une fonction et/ou un autre mode de sauvegarde permettant d'établir au moins un second canal de communication et/ou un autre mode de sauvegarde, et dans le cas favorable,
- ouvrir la communication sur ce second canal et/ou cet autre mode, et réaliser la sauvegarde des données via ce second canal de communication et/ou cet autre mode.

Selon une caractéristique le dispositif portable se compose d'une carte d'identification d'abonné. La carte est destinée à fonctionner en relation avec un appareil mobile de communication.

Le dispositif au sens de l'invention englobe tout appareil portable de communication sans fil (mobile), tel que PDA, assistant personnel ayant une fonction de communication sans fil... et fonctionnant avec ou sans carte à microcircuit, ainsi qu'une carte à microcircuit SIM, U (SIM) .

D'autres caractéristiques et avantages de la présente invention apparaîtront à la lecture de la description suivante d'exemples particuliers de réalisation, ladite description étant faite avec les dessins joints dans lesquels :

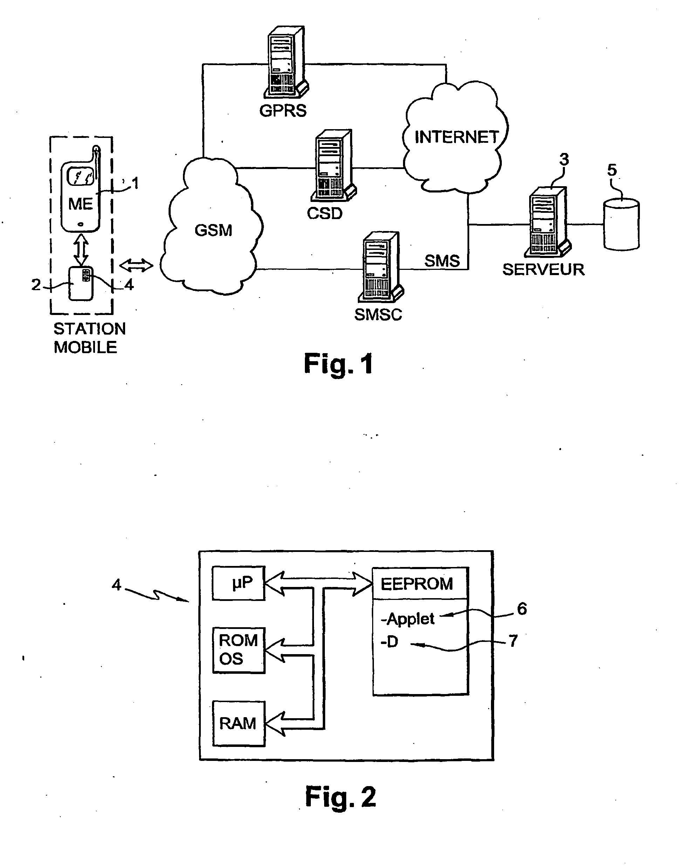

- la figure 1 est un schéma illustrant l'architecture réseau de l'invention,
- la figure 2 est un schéma illustrant un microcircuit de la carte SIM,
- la figure 3 est un schéma illustrant les étapes d'un programme de sauvegarde selon le procédé de l'invention,
- les figures 4 et 5 illustrent des tests et modes complémentaires ou alternatifs du programme de sauvegarde de la figure 3.

Dans l'exemple on utilise une architecture de communication sans fil pour réseau de type GSM, comportant des stations mobiles de radiotéléphonie, comportant des mobiles ME (1) d'abonnés équipés de carte SIM (2), et un serveur 3 distant accessible par messages courts dits SMS, par des canaux GPRS ou CSD acronymes pour les expressions anglo-saxonnes (General packet Radio Service) et (Circuit Switched Data). En fait, les réseaux peuvent être multiples et présenter différentes caractéristiques. Ils peuvent comprendre également un réseau de type UMTS, WLAN (acronymes respectifs des expressions anglo-saxonnes "Universal Mobile Telecommunications System" et "Wireless Local Area Network") ... et peuvent véhiculer des données personnelles de l'abonné simples ou sophistiquées telles que multimédia de type MMS ou des flux vidéo, audio.

Les mobiles 1 peuvent englober d'autres appareils de communication tels que PDA, assistant personnel dotés d'une interface de communication sans fil.

Les données personnelles 7 peuvent être stockées préalablement dans l'appareil mobile 1 et/ou dans un microcircuit 4 de la carte. Dans l'exemple les données seront initialement dans le microcircuit.

Le serveur 3 contient, une interface de communication pour recevoir et émettre des messages avec les stations mobiles, une unité de traitement, un programme applicatif de sauvegarde "serveur" de type connu et une base de données 5 pour la sauvegarde de données personnelles des abonnés.

La puce électronique 4 de la carte d'identification d'abonné comporte de manière connue, un processeur relié via un bus de données et de commandes, d'une part à une mémoire programme ROM comprenant notamment un système d'exploitation de la carte et des algorithmes spécifiques, et d'autre part à une mémoire programmable et à une mémoire vive RAM.

La mémoire programmable, notamment de type EEPROM, comprend notamment des données de l'abonné ou données relatives à son abonnement avec sa clé de chiffrement associëe(IMSI, Ki) pour autoriser un service de communication et des applications spécifiques.

Selon une caractéristique de l'invention, la carte comprend un programme applicatif 6, dit applet, stocké dans sa mémoire programmable et qui est capable de lancer une sauvegarde des données de manière optimisée selon les canaux disponibles et/ou accessibles et/ou selon des modes particuliers de sauvegarde.

L'application peut être par exemple du type Sim Toolkit ce qui signifie qu'elle utilise des jeux de commandes conformes à la recommandation GSM 11.14 permettant à la carte d'être « pro-active » dans le sens où elle prend des initiatives pour diriger notamment le mobile.

Pendant l'exécution de l'applet par le processeur de la carte, la carte a pris la main des échanges avec le mobile.

Ce programme de sauvegarde est de manière connue apte à demander au mobile de transmettre au serveur pour sauvegarde au moins un premier sous-ensemble de données parmi un ensemble de données à sauvegarder.

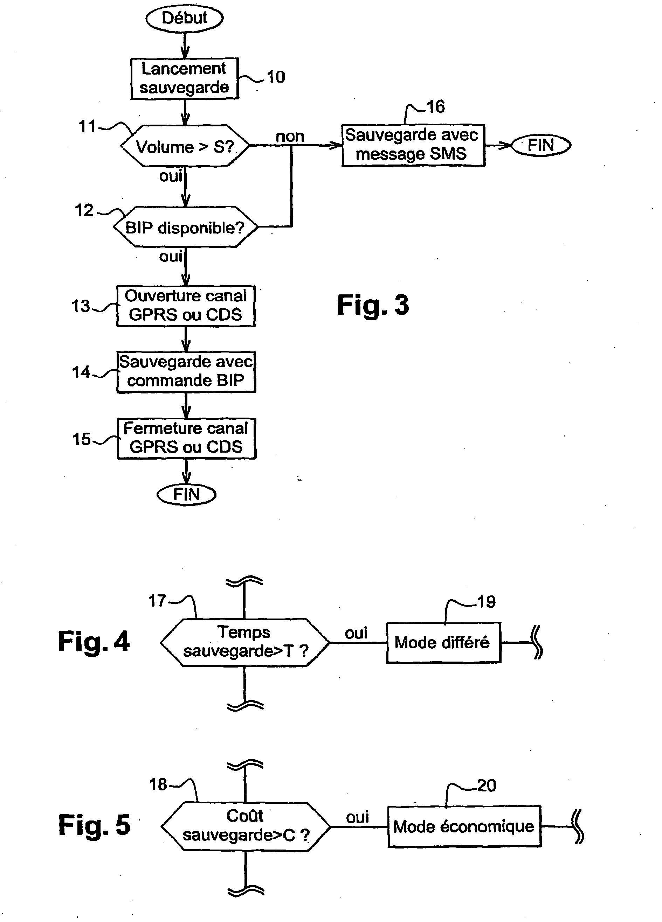

Le procédé de l'invention est décrit tout d'abord en relation avec la figure 3 selon le mode préféré.

Un abonné détient une carte SIM 2 avec un abonnement GPRS et un programme applicatif de sauvegarde avancée appelé "applet SIMchronize BIP". Dans la SIM, les données personnelles se composent d'un répertoire téléphonique de 255 numéros de téléphones représentant un volume supérieur à 500 kBytes.

L'abonné met la SIM dans le mobile 1 qui supporte la fonction BIP de l'acronyme pour l'expression anglo-saxonne (Bearer Indépendant Protocole). La fonction "BIP" est une option du standard ETSI "GSM 11 14" décrivant le "SIM ToolKit (STK)" et qui définit un ensemble de commandes et de situations pro-actives de la carte. Selon ce protocole, la SIM peut utiliser les moyens de communication de l'équipement mobile ME quelle que soit la technologie de communication utilisée.

La SIM détectera automatiquement si le mobile est "BIP" lors d'une réception de son statut au cours d'un échange préliminaire de données; Elle peut sauvegarder cette information dans une mémoire adaptée.

A partir d'un menu de l'application de sauvegarde affiché à l'écran, l'abonné lance 10 la sauvegarde de son répertoire téléphonique sur un serveur distant 3.

Le programme de sauvegarde 6 met en oeuvre une étape d'évaluation des données à sauvegarder (étape implicite ou comprise dans le test qui suit) et un test 11 du volume de données à sauvegarder. Le volume évalué est comparé à un seuil égal à 200 KBytes.

Comme le volume des données à sauvegarder dépasse le seuil, le programme de sauvegarde se branche sur un autre test 12 qui consiste à déterminer si le mobile est BIP.

Dans ce test, on va lire les informations reçues du mobile lors de sa mise sous tension et stockées dans une mémoire de statut dans la carte. Comme le mobile est BIP, cela signifie que la sauvegarde va pouvoir s'effectuer via un autre canal plus intéressant par rapport au volume de données à sauvegarder.

Comme c'est le cas, à l'étape suivante 13, la carte ouvre le canal GPRS et demande ensuite au mobile à l'étape 14 de transmettre les données à sauvegarder via ce canal.

La sauvegarde se fait alors en mode GPRS avec un affichage séquentiel du nombre de numéros envoyés au fur et à mesure, à très grande vitesse.

A réception d'un accusé réception du serveur ou avant, la carte SIM envoie une commande de fermeture du canal GPRS à l'étape 15 ce qui achève le programme de sauvegarde avancée selon l'invention.

Ensuite, l'abonné ajoute un nouveau contact dans son répertoire et depuis le menu de son application de sauvegarde, il lance la sauvegarde sur le serveur comme précédemment.

L'application a évalué que le volume des données à sauvegarder est inférieur à 200 KBytes (branche NON du test 11) et par conséquent se branche directement sur une étape 16 consistant à envoyer une commande au mobile pour que celui-ci transmette le numéro au serveur à l'aide d'un premier canal permettant des messages SMS et selon un mode continu.

Pour la définition du seuil, le programme de sauvegarde qui reçoit par exemple une consigne de délai d'attente maxi de 1 minute, peut comprendre une logique qui va transposer le seuil de délai en seuil de volume et inversement. Le programme peut transposer selon des valeurs connues de débits des différents canaux, le temps nécessaire à la transmission d'un volume de données selon des règles préétablies qu'il contient.

Selon d'autres caractéristiques de l'invention, le programme peut également consister en une évaluation du meilleur canal à utiliser selon différents critères et via un aiguillage automatique vers un canal adapté.

Il peut également consister à informer l'abonné du meilleur canal quitte à ce dernier de valider un choix de canal proposé à l'écran.

Les critères peuvent être programmés, modifiés selon les souhaits de l'abonnés, tels que délai d'attente, coût, fiabilité,...

Un complément de test ou d'alternative au test 11 est illustré aux figures 4 et 5. Le test peut consister à satisfaire un critère tel que le temps nécessaire de sauvegarde 17 (cas d'indisponibilité du mobile) ou éventuellement le coût de la sauvegarde 18 (cas de données volumineuses, photos... multimédia). Ainsi, l'abonné peut souhaiter effectuer la sauvegarde d'un volume important mais en diminuant le coût et/ou le délai d'attente.

L'invention peut comprendre d'autres modes de sauvegarde spécifiques (19, 20) par exemple, économiques, différées dans le temps et/ou l'espace, déclenchées dans des tranches horaires plus intéressantes ou dès qu'une couverture particulière d'un réseau est détectée.

Un mode différé peut être par exemple du type asynchrone visant à scinder les données à sauvegarder et espacer la sauvegarde. De même, il peut consister à effectuer la sauvegarde à un horaire particulier ou un lieu particulier, (une zone géographique par exemple dans le cas des WLAN). La sauvegarde peut s'effectuer automatiquement dès que les conditions répondant aux critères sont satisfaites, le lieu géographique détecté ou une couverture du réseau particulier obtenue...

Ces différents modes sont déclenchés par des tests associés présents dans l'application de sauvegarde. Les seuils des tests et/ou différents critères sont paramétrables par défaut ou par l'abonné.

Pour définir le coût d'une opération de sauvegarde, le dispositif peut comprendre un tableau de coût ou une règle de calcul utilisée par l'application de sauvegarde en fonction des paramètres de coût en vigueur. Les valeurs de référence et paramètres de ces coûts peuvent être téléchargées par l'opérateur ou un serveur. Le coût prévisionnel peut être aussi déterminé par un échange préalable station mobile / serveur.

Une caractéristique du procédé de l'invention réside dans des moyens ou étapes permettant d'agir sur la sauvegarde de différentes manières, que ce soit via des canaux et/ou selon des modes adaptés en fonction de critères de l'abonné.

L'abonné peut se voir offrir un canal et/ou un mode de sauvegarde selon des critères choisis par ordre de priorité par exemple dans l'ordre: coût, rapidité, fiabilité, sécurité; ou éventuellement avec des seuils, des combinaisons ou rapports de critères et/ou des modes imposés par exemple : meilleur rapport coût fiabilité, coût / sécurité, etc. Pour la fiabilité, le SMS peut être préféré, tandis que ce peut être le GPRS pour la rapidité et le coût.

A cet effet, l'application peut comporter un tableau des propriétés/avantages des différents modes et canaux possibles qui seront croisées avec des critères introduits ou sélectionnés par l'abonné afin de prédéfinir la manière optimale dont sera effectuée la sauvegarde. '

Dans le cas où le mobile ne serait pas perfectionné du fait par exemple de l'absence de la fonction BIP, le fonctionnement de l'application de sauvegarde avancée peut être transparent pour l'abonné dans la mesure où le programme aboutira toujours à une sauvegarde par SMS. Le cas échéant, seul quelques modes de sauvegarde peuvent être utilisées. Et, le jour où l'abonné obtiendra un nouveau mobile pouvant fonctionner avec d'autres canaux, il pourra conserver la carte SIM avec ses données personnelles résidantes et sera en mesure de mettre en oeuvre l'application de sauvegarde avancée de manière automatique.

Dans le cas contraire, si le mobile supporte plusieurs canaux comme GPRS et CSD, WLAN l'invention permet une sauvegarde avancée et sur mesure comme visée précédemment

## Revendications

1. Procédé de sauvegarde de données personnelles d'un abonné à un réseau de communications sans fil, les données étant mémorisées dans une station mobile de communication et sauvegardées dans un serveur du réseau, à l'aide d'un premier canal de communication et selon un premier mode de sauvegarde, **caractérisé en ce qu'**il comprend au moins les étapes suivantes selon lesquelles:
- on recherche si ladite station mobile dispose d'une fonction permettant d'établir au moins un second canal de communication et/ou un autre mode de sauvegarde, et dans le cas favorable,
- on ouvre la communication sur ce second canal et/ou selon cet autre mode, et on réalise la sauvegarde des données via ce second canal de communication et/ou cet autre mode.

2. Procédé selon la revendication 1, **caractérisé en ce que** la fonction permettant d'établir au moins un second canal de communication est le protocole indépendant du support (BIP).

3. Procédé selon l'une quelconque des revendications précédentes, **caractérisé en ce qu'**il comporte une étape préalable (11) selon laquelle on détecte que le volume des données à sauvegarder est supérieur à un volume prédéterminé, et on choisit le second canal et/ou un autre mode plus adapté.

4. Procédé selon la revendication 3, **caractérisé en ce que** le volume prédéterminé est égal à 200 Kbytes.

5. Procédé selon l'une quelconque des revendications précédentes, **caractérisé en ce que** le second canal est choisi parmi CSD, GPRS, WLAN.

6. Procédé selon l'une quelconque des revendications précédentes, **caractérisé en ce que** le premier canal est du type à messages courts SMS.

7. Procédé selon l'une quelconque des revendications précédentes, **caractérisé en ce qu'**il comprend une étape préalable d'évaluation selon laquelle on détermine si le coût des données à sauvegarder est supérieur à un seuil prédéterminé, et on effectue la sauvegarde selon un canal et/ou un mode de sauvegarde plus adapté.

8. Procédé selon l'une quelconque des revendications précédentes, **caractérisé en ce qu'**il comprend une étape préalable d'évaluation (18) selon laquelle on détermine si le coût des données à sauvegarder est supérieur à un seuil prédéterminé,
et on effectue la sauvegarde selon un canal et/ou un mode de sauvegarde adapté.

9. Dispositif portable comprenant une application pour la sauvegarde de données personnelles d'un abonné dans un serveur d'un réseau de communications sans fil, à l'aide d'un premier canal de communication et selon un premier mode de sauvegarde,
**caractérisé en ce que** l'application est apte à mettre en oeuvre les étapes suivantes consistant :
- à rechercher si le dispositif dispose d'une fonction et/ou un autre mode de sauvegarde permettant d'établir au moins un second canal de communication et/ou un autre mode de sauvegarde, et dans le cas favorable,
- ouvrir la communication sur ce second canal et/ou cet autre mode, et réaliser la sauvegarde des données via ce second canal de communication et/ou cet autre mode.

10. Dispositif portable selon la revendication 9, **caractérisé en ce qu'**il se compose d'une carte d'identification d'abonné.

## Claims

1. A method for saving the personal data of a subscriber to a wireless communication network, data being stored in a communication mobile station and saved in a server of the network using a first communication channel and according to a first saving mode, **characterized in that** it includes at least the following steps, wherein:
- a function making it possible to set up at least one second communication channel and/or another saving mode is searched in said mobile station, and if the case is favorable,
- the communication on such second communication channel and/or according to such another mode is opened, and data are saved via such second communication channel and/or such other mode.

2. A method according to claim 1, **characterized in that** the function making it possible to set up at least one second communication channel is the medium-independent protocol (BIP).

3. A method according to any one of the preceding claims, **characterized in that** it includes a prior step (11) wherein it is detected that the volume of data to be saved is greater than a predetermined volume, and the second channel and/or a more suitable saving mode is selected.

4. A method according to claim 3, **characterized in that** the predetermined volume is equal to 200 Kbytes.

5. A method according to any one of the preceding claims, **characterized in that** the second channel is selected among CDS, GPRS, WLAN.

6. A method according to any one of the preceding claims, **characterized in that** the first channel is of the short message SMS type.

7. A method according to any one of the preceding claims, **characterized in that** it includes a prior estimation step, wherein it is determined whether the cost of data to be saved is greater than a predetermined threshold, and the saving is performed according to a more suitable channel and/or saving mode.

8. A method according to any one of the preceding claims, **characterized in that** it includes a prior estimation step (18), wherein it is determined whether the cost of data to be saved is greater than a predetermined threshold,
and the saving is performed according to a suitable channel and/or saving mode.

9. A portable device including an application for saving a subscriber's personal data in a server of a wireless communication network, using a first communication channel and according to a first saving mode,
**characterized in that** the application is capable of implementing the following steps, which consist in:
- searching whether the device has a function and/or another saving mode making it possible to set up at least a second communication channel and/or another saving mode, and if the case is favorable,
- opening the communication on said second channel and/or such other mode, and saving the data via such communication channel and/or such other mode.

10. A portable device according to Claim 9, **characterized in that** it is constituted by a subscriber's identification card.

## Patentansprüche

1. Verfahren für die Sicherung von persönlichen Daten eines Abonnenten eines schnurlosen Kommunikationsnetzes, wobei die Daten in einer mobilen Kommunikationsstation gespeichert werden und in einem Server des Netzes gesichert werden, und dies mit einem ersten Verbindungskanal und nach einem ersten Sicherungsmodus, **dadurch gekennzeichnet, daß** es mindestens die nachstehenden Schritte Umfaßt, bei denen:
- untersucht wird, ob die besagte mobile Station über eine Funktion verfügt, mit der mindestens ein zweiter Verbindungskanal und/oder ein anderer Sicherungsmodus erstellt werden kann, und wenn dies der Fall ist,
- wird die Verbindung auf diesem zweiten Kanal und/oder nach diesem anderen Modus geöffnet, und die Sicherung der Daten wird über diesen zweiten Verbindungskanal und/oder diesen anderen Modus ausgeführt.

2. Verfahren nach Anspruch 1, **dadurch gekennzeichnet, daß** die Funktion, mit der mindestens ein zweiter Verbindungskanal erstellt werden kann, das BIP (Unabhängiges Protokoll des Trägers) ist.

3. Verfahren nach einem beliebigen der vorstehenden Ansprüche, **dadurch gekennzeichnet, daß** es einen vorherigen Schritt (11) umfaßt, bei dem entdeckt wird, daß das Volumen der zu sichernden Daten größer als ein vorbestimmtes Volumen ist, und es wird der zweite Kanal und/oder ein anderer besser geeigneter Modus gewählt.

4. Verfahren nach Anspruch 3, **dadurch gekennzeichnet, daß** das vorbestimmte Volumen gleich 200 Kbytes ist.

5. Verfahren nach einem beliebigen der vorstehenden Ansprüche, **dadurch gekennzeichnet, daß** der zweite Kanal unter CSD, GPRS, WLAN gewählt wird.

6. Verfahren nach einem beliebigen der vorstehenden Ansprüche, **dadurch gekennzeichnet, daß** der erste Kanal von der Art mit Kurzmeldungen SMS ist.

7. Verfahren nach einem beliebigen der vorstehenden Ansprüche, **dadurch gekennzeichnet, daß** es einen vorherigen Bewertungsschritt Umfaßt, nach dem bestimmt wird, ob die Kosten der zu sichernden Daten über einer vorbestimmten Schwelle liegen, und die Sicherung wird mit einem besser geeigneten Kanal und/oder Sicherungsmethode durchgeführt.

8. Verfahren nach einem beliebigen der vorstehenden Ansprüche, **dadurch gekennzeichnet, daß** es einen vorherigen Bewertungsschritt (18) Umfaßt, nach dem bestimmt wird, ob die Kosten der zu sichernden Daten über einer vorbestimmten Schwelle liegen,
und die Sicherung wird nach einem geeigneten Kanal und/oder Sicherungsmodus durchgeführt.

9. Tragbare Vorrichtung, die eine Anwendung für die Sicherung von persönlichen Daten eines Abonnenten in einem Server eines schnurlosen Kommunikationsnetzes mit Hilfe eines ersten Kommunikationskanals und nach einem ersten Sicherungsmodus Umfaßt,
**dadurch gekennzeichnet, daß** die Anwendung geeignet ist, die nachstehenden Schritte einzusetzen, die aus folgenden Vorgängen bestehen:
- Zu erforschen, ob die Vorrichtung über eine Funktion und/oder einen anderen Sicherungsmodus verfügt, mit dem mindestens ein zweiter Verbindungskanal und/oder ein anderer Sicherungsmodus erstellt werden kann, und wenn dies der Fall ist,
- Die Verbindung auf diesem zweiten Kanal und/oder diesem anderen Modus zu öffnen und die Sicherung der Daten über diesen zweiten Verbindungskanal und/oder diesen anderen Modus durchzuführen.

10. Tragbare Vorrichtung nach Anspruch 9, **dadurch gekennzeichnet, daß** sie aus einer Abonnentenkennkarte besteht.
